# EUROPÄISCHE PATENTSCHRIFT

(11) **EP 0 850 801 B1**
(45) Veröffentlichungstag und Bekanntmachung des Hinweises auf die Patenterteilung: **13.06.2001**
(21) Anmeldenummer: 97122613.9
(22) Anmeldetag: 22.12.1997
(51) Int. Cl.: B60N 2/00, B60N 2/48

(54) **Kopfstütze für Fahrzeugsitze**
Head rest for vehicle seats
Appuie-tête pour sièges de véhicule

(30) Priorität: 23.12.1996 DE 19653970
(43) Veröffentlichungstag der Anmeldung: 01.07.1998
(73) Patentinhaber: GRAMMER Automotive GmbH, 92224 Amberg (DE)
(72) Erfinder: Pausch, Friedhelm, 42697 Solingen (DE)
(74) Vertreter: Patentanwälte Ostriga & Sonnet

(56) Entgegenhaltungen:
- DE-A- 2 720 603
- DE-A- 2 720 629
- DE-A- 4 221 610
- DE-C- 3 618 677
- DE-C- 19 626 761
- DE-U- 9 400 640
- DE-U- 9 415 511

## Beschreibung

Die Erfindung betrifft eine Kopfstütze für Fahrzeugsitze entsprechend dem Oberbegriff des Anspruchs 1.

Eine solche Kopfstütze für Fahrzeugsitze gemäß der nicht vorveröffentlichten Patentanmeldung DE 196 28 609 weist eine umgekehrt U-förmige Traghalterung auf. Diese U-förmige Traghalterung besitzt zwei im Parallelabstand zueinander angeordnete Tragrohre, deren untere Bereiche, die Verstellbereiche, mit Rastkerben versehen sind, welche mit sitzlehnenseitig angeordneten Rasthülsen kooperieren.

Die oberen Enden der beiden Tragrohre sind mittels eines Jochbügels miteinander verbunden, dessen nach unten weisende Einsteckenden in die oberen Innenrohrbereiche der beiden Tragrohre kraft- und formschlüssig eingreifen. Der Steg des Jochbügels dient zugleich als Lagerachse für einen mit einem Kopfpolster umgebenen neigeverstellbaren Tragkörper. Auch der Jochbügel ist aus einem rohrförmigen Werkstück hergestellt.

Im Bewußtsein der Eigenarten der Traghalterung der vorbeschriebenen Kopfstütze, liegt der Erfindung die Aufgabe zugrunde, die bisherige Traghalterung so umzugestalten, daß diese neben ihrer hauptsächlichen Funktion einer Verstellhalterung für den Kopfpolster-Tragkörper noch zusätzliche Funktionen erfüllen kann.

Diese Aufgabe hat die Erfindung allgemein dadurch gelöst, daß anstelle des gesamten Jochbügels nur ein Jochbügelsteg vorhanden ist, dessen beide Enden jeweils mittels eines Eckverbinders mit dem oberen Bereich je eines Tragrohres verbunden sind, wobei der Tragrohr-Innenraum zumindest teilweise über den Eckverbinder zugänglich ist.

In weiterer Ausgestaltung der Erfindung ist der am oberen Ende des Tragrohres befestigte Bereich des Eckverbinders als aufgestecker Rohrbereich ausgebildet.

Der zur Aufnahme des Jochbügelsteges bestimmte Bereich des Eckverbinders, der Verbindungsbereich, ist nach einer ersten Erfindungsvariante als rohrförmiger Aufsteckbereich ausgebildet, welcher einen Endbereich des Jochbügelsteges umgreift.

Außerdem ist es möglich, daß der Verbindungsbereich mit einem Steckzapfen in einen endseitigen rohrartigen Bereich des Jochbügelsteges eingreift.

Ein Eckverbinder kann derart ausgestaltet sein, daß die Längsachse eines Tragrohres und die Längsachse des angeschlossenen Jochbügelsteges etwa in einer Ebene angeordnet sind.

Es ist aber auch möglich, den Eckverbinder so auszubilden, daß der Jochbügelsteg und das benachbarte Tragrohrende in zwei zueinander versetzten Ebenen angeordnet sind.

Mit den vorbezeichneten erfindungsgemäßen Ausführungsformen ist es im Unterschied zur eingangs beschriebenen Kopfstütze möglich geworden, eine beispielsweise umgekehrt U-förmige Traghalterung so auszubilden, daß der Eckverbinder einen freien Zugangsbereich, und zwar in erster Linie für beide Tragrohre, bildet.

Dieser freie Zugangsbereich ermöglicht es, den Tragrohr-Innenraum als Aufnahmeraum für mechanische Betätigungsmittel, wie z.B. für eine Betätigungsstange einer sitzlehnenseitigen Tragrohrverrastung bzw. Tragrohrverriegelung zu nutzen.

Außerdem gestattet es die Erfindung, das Tragrohr zur Fortleitung von Antriebsenergie zu nutzen, indem z.B. elektrische, pneumatische oder hydraulische Leitungen im Tragrohr-Innenraum Aufnahme finden und sodann im Bereich des Eckverbinders aus dem Tragrohr-Innenraum austreten.

In weiterer Ausgestaltung der Erfindung kann der Verbindungsbereich eines jeden Eckverbinders hohl ausgebildet und derart beschaffen sein, daß dieser Verbindungsbereich den Zugang zum Innenraum eines rohrförmig ausgebildeten Jochbügelstegs gestattet.

In den Zeichnungen sind bevorzugte Ausführungsbeispiele entsprechend der Erfindung schematisch dargestellt, es zeigt,
Fig. 1 eine vertikalschnittartige Darstellung einer Kopfstütze für Kraftfahrzeugsitze,
Fig. 2 eine vergrößerte Darstellung des in Fig. 1 mit II bezeichneten eingekreisten Bereichs,
Fig. 3 in Anlehnung an die Darstellung gemäß Fig. 2 eine Ausführungsvariante,
Fig. 4 analog zu den Darstellungen der Fig. 2 und 3 eine weitere Ausführungsvariante,
Fig. 5 eine Ansicht entsprechend dem in Fig. 2 mit V bezeichneten Ansichtspfeil,
Fig. 6 in Anlehnung an die Darstellung gemäß Fig. 5 eine Ausführungsform, bei welcher ein Eckverbinder zugleich einen Auslegerbereich bildet.

Analoge Bauteile oder Bereiche der unterschiedlichen Ausführungsformen sind mit denselben Bezeichnungen und Bezugsziffern versehen.

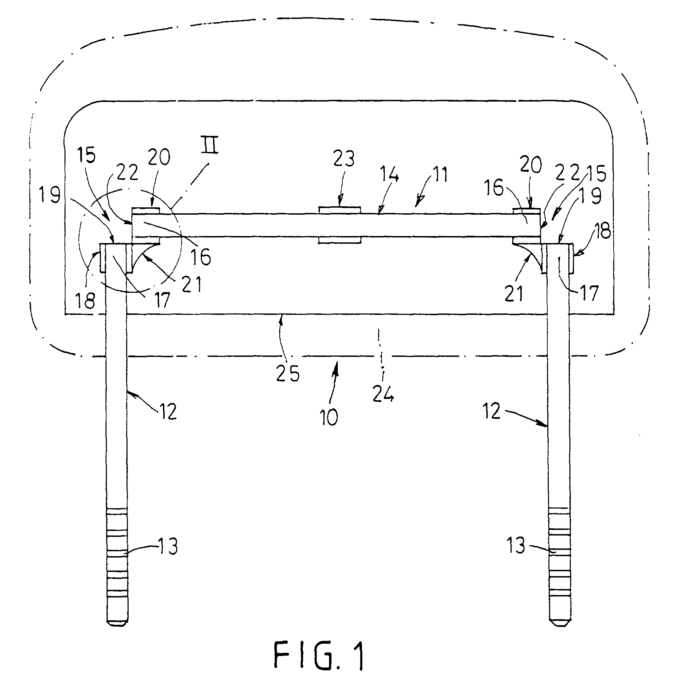

In Fig. 1 ist: eine Kopfstütze insgesamt mit der Bezugsziffer 10 bezeichnet.

Eine Traghalterung 11 weist zwei gerade oder gekrümmt verlaufende Tragrohre 12 auf, welche mit ringförmig eingearbeiteten Nuten 13 in ihren unteren Bereichen versehen sind, welche Rasten bilden, die mit nicht dargestellten Gegenrasten sitzlehnenseitiger Führungsteile (z.B. Rasthülsen) zusammenwirken.

Die beiden Endbereiche 16 eines Jochbügelstegs 14 sind über Eckverbinder 15 mit den oberen Endbereichen 17 der Tragrohre 12 verbunden.

Hierzu weist ein jeder Eckverbinder 15 einen Aufsteckrohrbereich 18 auf, welcher den oberen Endbereich 17 eines jeden Tragrohrs 12 umschließt und zugleich die stirnseitige Öffnung 19 des Tragrohres 12 frei zugänglich beläßt.

Auch der Verbindungs- bzw. Anschlußbereich 20 eines jeden Eckverbinders 15 stellt einen Aufsteckrohrbereich dar, welcher jeweils den Endbereich 16 des ebenfalls rohrartig ausgebildeten Jochbügelstegs 14 umschließt und auch hier dessen jeweilige stirnseitige Öffnung 22 frei zugänglich beläßt. Die Aufsteckrohrbereiche 18, 20 eines jeden Eckverbinders 15 sind mittels einer Brücke 21 stoffschlüssig miteinander verbunden, so daß der Eckverbinder 15 insgesamt ein einstückiges Bauteil, z.B. ein Gußteil, wie z.B. ein Metalldruckgußteil oder ein Spritzgußteil aus einem geeigneten Kunststoff, darstellt.

Der Jochbügelsteg 14 dient im übrigen der Halterung eines schellenartigen Lagerteils 23, welches einen von einem Kopfpolster 24 umgebenen Tragkörper 25 neigeverstellbar auf dem Bügelsteg 14 lagert.

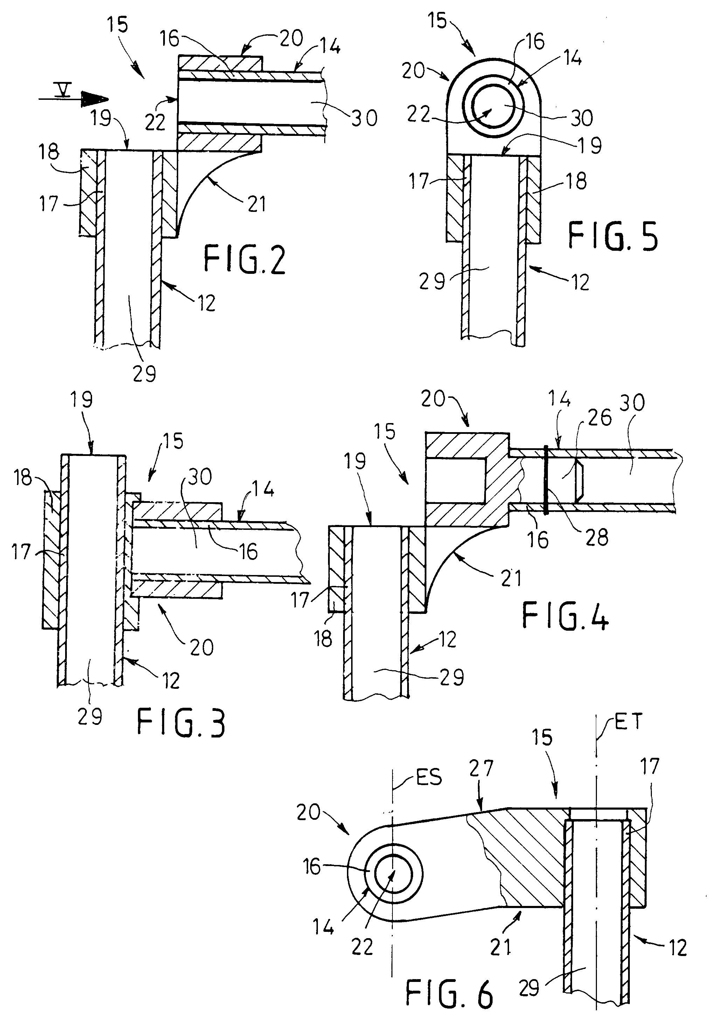

Am Beispiel der Fig. 1 und 2 wird deutlich, daß die Eckverbinder 15 jeweils beide stirnseitige Öffnungen 19, 22 frei zugänglich halten, so daß sowohl der Innenraum 29 jedes Tragrohres 12 als auch der Innenraum 30 jedes rohrartigen Jochbügelsteges 14 der Aufnahme von Funktionsbauteilen, wie z.B. eines Betätigungsgestänges zu Verstellung der Kopfstütze 10, einer elektrischen, hydraulischen oder pneumatischen Leitung od.dgl. dienen kann.

So kann beispielsweise ein im Innenraum 29 eines Tragrohres 12 aufgenommenes, nicht dargestelltes Betätigungsgestänge für die Rastmechanik zwischen Tragrohr 12 und ebenfalls nicht gezeigter sitzlehnenseitiger Führungshülse oben aus der stirnseitigen Öffnung 19 des Tragrohres 12 herausgeführt sein. Von dort aus können zwischengeschaltete mechanische Verbindungsglieder zu einer Betätigungstaste am seitlichen Spiegelbereich des Kopfpolsters führen.

Bei den Ausführungsformen gemäß den Fig. 3 und 4 genügt es, lediglich den Innenraum 29 des Tragrohrs 12 über dessen Stirnseite 19 frei zugänglich zu halten, während der Innenraum 30 des rohrförmigen Jochbügelsteges 14 nicht der Aufnahme irgendwelcher Funktionsbauteile dient.

Gemäß Fig. 3 ist der rohrförmige Aufsteckbereich 18 bezüglich der stirnseitigen Öffnung 19 in Axialrichtung nach unten versetzt angeordnet.

Die Ausführungsform gemäß Fig. 4 entspricht hinsichtlich ihrer Relativposition bezüglich des Tragrohres 12 der Ausführungsform gemäß den Fig. 1 und 2. Indessen weist der Verbindungsbereich 20 des Eckverbinders 15 gemäß Fig. 4 einen in dem rohrförmigen Jochbügelsteg 14 steckgehalterten Zapfen 26 auf, welcher mittels eines den Steckzapfen 26 und den Endrohrbereich durchsetzenden Paßstiftes, Spannbolzens, Niets 28 od.dgl. axial gesichert ist. Auch bei dem Ausführungsbeispiel gemäß Fig. 4 ist der Innenraum 30 des Jochbügelsteges 14 nicht zur Aufnahme von zusätzlichen Funktionsbauteilen vorgesehen.

Die Ausführungsform gemäß Fig. 6 ist grundsätzlich ähnlich der Ausführungsform gemäß den Fig. 1 und 2 ausgebildet, mit dem Unterschied, daß ein Auslegerbereich 27 den Jochbügelsteg 14 in einer neben der Ebene ET der beiden Tragrohre 12 seitlich versetzten Ebene ES hält.

Die Verbindung zwischen dem Eckverbinder 15 und den Rohren 12, 14 kann durch Formschluß und/oder Kraftschluß, auch in Verbindung einer Verklebung, bewirkt sein.

## Patentansprüche

1. Kopfstütze (10) für Fahrzeugsitze mit einem Tragkörper (25), welcher an einer U-förmigen Traghalterung (11) gehalten ist, die zwei im Parallelabstand zueinander angeordnete Tragrohre (12) aufweist, deren untere Bereiche sitzlehnenseitig angeordnete Verstellbereiche (bei 13) bilden, wobei die von der Sitzlehne abgewandten oberen Endbereiche (17) der beiden Tragrohre (12) mittels eines Jochbügels (14) miteinander verbunden sind, dadurch gekennzeichnet, daß der gesamte Jochbügel nur einen Jochbügelsteg (14) darstellt, dessen beide Endbereiche (16) jeweils mittels eines Eckverbinders (15) mit dem oberen Endbereich (17) je eines Tragrohres (12) verbunden sind, wobei der Tragrohr-Innenraum (29) zumindest teilweise über den Eckverbinder (15) zugänglich ist.

2. Kopfstütze nach Anspruch 1, dadurch gekennzeichnet, daß der am oberen Endbereich (17) eines Tragrohres (12) befestigte Bereich des Eckverbinders (15) als aufgesteckter Rohrbereich (18) ausgebildet ist.

3. Kopfstütze nach Anspruch 1 oder nach Anspruch 2, dadurch gekennzeichnet, daß der zur Aufnahme des Jochbügelsteges (14) bestimmte Bereich des Eckverbinders (15), der Verbindungsbereich (20), einen rohrförmigen Aufsteckbereich bildet, welcher einen Endbereich (16) des Jochbügelsteges (14) umgreift.

4. Kopfstütze nach einem der Ansprüche 1 bis 3, dadurch gekennzeichnet, daß der Jochbügelsteg (14) ein Rohr ist.

5. Kopfstütze nach Anspruch 1 oder nach Anspruch 2 oder nach Anspruch 4, dadurch gekennzeichnet, daß der zur Aufnahme des Jochbügelsteges (14) bestimmte Bereich des Eckverbinders (15), der Verbindungsbereich (20), mit einem Steckzapfen (26) in einen rohrartigen Endbereich (16) des Jochbügelsteges (14) eingreift.

6. Kopfstütze nach einem der Ansprüche 1 bis 5, gekennzeichnet durch einen Eckverbinder (15), welcher die Ebene (ET) der Längsachse eines jeden Tragrohres (12) und den Jochbügelsteg (14) etwa in einer Ebene hält.

7. Kopfstütze nach einem der Ansprüche 1 bis 6, gekennzeichnet durch einen Eckverbinder (15), welcher die Ebene (ET) der Längsachse eines jeden Tragrohres (12) und den Jochbügelsteg (14) in zwei zueinander versetzten Ebenen hält.

8. Kopfstütze nach einem der Ansprüche 1 bis 7, dadurch gekennzeichnet, daß jeder Eckverbinder (15) einen freien Zugangsbereich für je ein Tragrohr (12) bildet.

9. Kopfstütze nach einem der Ansprüche 1 bis 8, dadurch gekennzeichnet, daß jeder Eckverbinder (15) einen freien Zugangsbereich sowohl für ein Tragrohr (12) als auch für den angeschlossenen rohrartigen Jochbügelsteg (14) bildet.

10. Kopfstütze nach einem der Ansprüche 1 bis 9, dadurch gekennzeichnet, daß der von mindestens einem Eckverbinder (15) gebildete freie Zugangsbereich zum Tragrohr-Innenraum (29) und/oder zum Innenraum (30) des rohrförmigen Jochbügelstegs (14) je einen Aufnahmeraum für mechanische Betätigungsmittel, wie z.B. für eine Betätigungsstange einer sitzlehnenseitigen Tragrohrverrastung (bei 13) oder für eine Tragrohrverriegelung bildet.

11. Kopfstütze nach einem der Ansprüche 1 bis 10, dadurch gekennzeichnet, daß mindestens ein Tragrohr (12) der Fortleitung von Antriebsenergie dient, z.B. elektrische, pneumatische oder hydraulische Leitungen im Tragrohr-Innenraum (29) aufnimmt, die im Bereich des Eckverbinders (15) aus dem Tragrohr-Innenraum (29) austreten.

12. Kopfstütze nach einem der Ansprüche 1 bis 11, dadurch gekennzeichnet, daß der Tragrohr-Innenraum (29) unmittelbar der Fortleitung eines Antriebsenergie bildenden Druckfluids dient.

## Claims

1. Headrest (10) for vehicle seats with a supporting body (25) which is held on a U-shaped supporting mount (11) comprising two supporting tubes (12) which are disposed at a parallel spacing from one another and the lower regions of which form adjustment regions (at 13) disposed on the seat back side, wherein the upper end regions (17) of the two supporting tubes (12) which are remote from the seat back are connected together by means of a yoke strap (14), characterised in that the overall yoke strap just represents a yoke strap crosspiece (14), the two end regions (16) of which are each connected by means of a corner connector (15) to the upper end region (17) of a respective supporting tube (12), wherein the supporting tube interior (29) is at least partly accessible via the corner connector (15).

2. Headrest according to Claim 1, characterised in that the region of the corner connector (15) which is fastened to the upper end region (17) of a supporting tube (12) is formed as a pushed-on tube region (18).

3. Headrest according to Claim 1 or Claim 2, characterised in that the region of the corner connector (15) which is intended to accommodate the yoke strap crosspiece (14), the connecting region (20), forms a tubular push-on region which embraces an end region (16) of the yoke strap crosspiece (14).

4. Headrest according to any one of Claims 1 to 3, characterised in that the yoke strap crosspiece (14) is a tube.

5. Headrest according to Claim 1 or Claim 2 or Claim 4, characterised in that the region of the corner connector (15) which is intended to accommodate the yoke strap crosspiece (14), the connecting region (20), engages by way of a push-in pin (26) in a tubular end region (16) of the yoke strap crosspiece (14).

6. Headrest according to any one of Claims 1 to 5, characterised by a corner connector (15) which holds the plane (ET) of the longitudinal axis of each supporting tube (12) and the yoke strap crosspiece (14) approximately in one plane.

7. Headrest according to any one of Claims 1 to 6, characterised by a corner connector (15) which holds the plane (ET) of the longitudinal axis of each supporting tube (12) and the yoke strap crosspiece (14) in two staggered planes.

8. Headrest according to any one of Claims 1 to 7, characterised in that each corner connector (15) forms a free access region for a respective supporting tube (12).

9. Headrest according to any one of Claims 1 to 8, characterised in that each corner connector (15) forms a free access region both for a supporting tube (12) and for the attached tubular yoke strap crosspiece (14).

10. Headrest according to any one of Claims 1 to 9, characterised in that the free access region formed by at least one corner connector (15) to the supporting tube interior (29) and/or to the interior (30) of the tubular yoke strap crosspiece (14) forms a respective accommodation space for mechanical actuating means such as, e.g. for an actuating rod of a supporting tube retaining device (at 13) on the seat back side or for a supporting tube interlocking device.

11. Headrest according to any one of Claims 1 to 10, characterised in that at least one supporting tube (12) serves to transmit driving energy, e.g. accommodates electric, pneumatic or hydraulic lines in the supporting tube interior (29) which emerge from the supporting tube interior (29) in the region of the corner connector (15).

12. Headrest according to any one of Claims 1 to 11, characterised in that the supporting tube interior (29) serves directly to transmit a hydraulic fluid which forms driving energy.

## Revendications

1. Appui-tête (10) pour sièges de véhicule, avec un corps-support (25), maintenu sur une fixation-support (11) en forme de U, présentant deux tubes-supports (12) disposés parallèlement et à distance l'un de l'autre, dont des zones inférieures constituent (en 13) des zones de réglage disposées du côté du dossier, les zones d'extrémité supérieures (17), opposées au dossier, des deux tubes-supports (12) étant reliées ensemble au moyen d'un étrier de jonction (14), caractérisé par le fait l'ensemble de l'étrier de jonction ne constitue qu'une âme d'étrier de jonction (14), dont les deux zones d'extrémité (16) sont chacune reliées, au moyen d'un raccord d'angle (15), à la zone d'extrémité supérieure (17) d'un tube-support (12), l'espace intérieur (29) d'un tube-support étant accessible, au moins partiellement, par le raccord d'angle (15).

2. Appui-tête selon la revendication 1, caractérisé par le fait la zone, fixée à la zone d'extrémité supérieure (17) d'un tube-support (12), du raccord d'angle (15) est réalisée sous la forme de zone tubulaire (19) à emboîtement.

3. Appui-tête selon la revendication 1 ou selon la revendication 2, caractérisé par le fait la zone, conçue pour recevoir la branche d'étrier de jonction (14), du raccord d'angle (15), la zone de liaison (20), constitue une zone d'emboîtement à forme tubulaire, entourant une zone d'extrémité (16) de la branche d'étrier de jonction (14).

4. Appui-tête selon l'une des revendications 1 à 3, caractérisé par le fait l'âme d'étrier de jonction (14) est constituée d'un tube.

5. Appui-tête selon la revendication 1 ou selon la revendication 2 ou selon la revendication 4, caractérisé par le fait la zone, conçue pour recevoir l'âme d'étrier de jonction (14), du raccord d'angle (15), la zone de liaison (20), s'engage, par un tourillon d'enfichage (26), dans une zone d'extrémité (16) tubulaire de l'âme d'étrier de jonction (14).

6. Appui-tête selon l'une des revendications 1 à 5, caractérisé par un raccord d'angle (15) qui maintient à peu près dans un même plan le plan (ET) de l'axe longitudinal de chaque tube-support (12) et l'âme d'étrier de jonction (14).

7. Appui-tête selon l'une des revendications 1 à 6, caractérisé par un raccord d'angle (15), qui maintient dans deux plans, décalés l'un par rapport à l'autre, le plan (ET) de l'axe longitudinal de chaque tube-support (12) et l'âme d'étrier de jonction (14).

8. Appui-tête selon l'une des revendications 1 à 7, caractérisé par le fait chaque raccord d'angle (15) constitue une zone d'accès libre pour chaque tube-support (12).

9. Appui-tête selon l'une des revendications 1 à 8, caractérisé par le fait chaque raccord d'angle (15) constitue une zone d'accès libre, tant pour un tube-support (12) qu'également pour l'âme d'étrier de jonction (14) tubulaire raccordée.

10. Appui-tête selon l'une des revendications 1 à 9, caractérisé par le fait la zone d'accès libre, constituée par au moins un raccord d'angle (15), à l'espace intérieur (29) de tube support et/ou à l'espace intérieur (30) de l'âme d'étrier de jonction (14) tubulaire constitue chaque fois un espace de logement pour des moyens d'actionnement mécaniques, tels que par exemple pour une barre d'actionnement d'un dispositif d'encliquetage de tube-support (en 13) situé côté dossier, ou bien pour un dispositif de verrouillage de tube-support.

11. Appui-tête selon l'une des revendications 1 à 10, caractérisé en ce qu'au moins un tube-support (12) sert à la transmission d'énergie d'entraînement, par exemple loge des lignes électriques, pneumatiques ou hydrauliques dans l'espace intérieur de tube-support (29), les lignes ressortant de l'espace intérieur de tube-support (29) dans la zone du raccord d'angle (15).

12. Appui-tête selon l'une des revendications 1 à 11, caractérisé par le fait l'espace intérieur (29) de tube-support sert directement à la transmission du fluide sous pression constituant une énergie d'entraînement.
